# EUROPÄISCHE PATENTSCHRIFT

(11) **EP 3 870 096 B1**
(45) Veröffentlichungstag und Bekanntmachung des Hinweises auf die Patenterteilung: **16.07.2025**
(21) Anmeldenummer: 19794938.1
(22) Anmeldetag: 22.10.2019
(51) Int. Cl.: A61C 5/44

(54) **ABSTANDSHALTER FÜR EIN ENDODONTISCHES INSTRUMENT**
SPACER FOR AN ENDODONTIC INSTRUMENT
ÉCARTEUR POUR UN INSTRUMENT D'ENDODONTIE

(30) Priorität: 22.10.2018 DE 102018126242
(43) Veröffentlichungstag der Anmeldung: 01.09.2021
(73) Patentinhaber: Eberhard Karls Universität Tübingen Medizinische Fakultät, 72074 Tübingen (DE)
(72) Erfinder: ELAYOUTI, Ashraf, 72070 Tübingen (DE)
(74) Vertreter: Witte, Weller & Partner Patentanwälte mbB
(86) Internationale Anmeldenummer: PCT/EP2019/078730
(87) Internationale Veröffentlichungsnummer: WO 2020/083911

(56) Entgegenhaltungen:
- DE-C2- 2 857 175
- US-A- 3 781 996

## Beschreibung

Die Erfindung betrifft einen Abstandshalter für ein endodontisches Instrument, beispielsweise für ein Wurzelkanal-Instrument. Ferner betrifft die Erfindung eine Vorrichtung zur Bereitstellung derartiger Abstandshalter. Außerdem betrifft die Erfindung ein Kit zur Verwendung während einer endodontischen Behandlung aufweisend den erfindungsgemäßen Abstandshalter und die erfindungsgemäße Vorrichtung.

Endodontische Instrumente, wie beispielsweise Feilen und Reamer, eingeschlossen Handinstrumente und Rotationsinstrumente, werden üblicherweise für die Reinigung und zum Weiten des Wurzelkanals von infizierten Zähnen verwendet. Bei der Behandlung von erkrankten Zahnwurzelkanälen wird hierbei das Pulpa-Gewebe entfernt, um Zugang zum apikalsten Ende des Zahns zu erlangen, um Bakterien vollständig zu entfernen.

Problematisch bei der Behandlung der Zähne ist meist die ungenaue Einhaltung der Arbeitslänge der Instrumente. Bei der Wurzelbehandlung ist es jedoch wichtig, dass die endodontischen Instrumente nur bis zu einer genau festgelegten maximalen Eindringtiefe in den jeweiligen Wurzelkanal eingeschoben werden. Hierbei sollen Überinstrumentierungen, Verschleppung von Bakterien, Schmerzen und andere Komplikationen bei der Behandlung vermieden werden.

Um die Länge der Wurzeln bzw. der Kanäle des Zahns feststellen zu können, sind verschiedene Methoden bekannt; beispielsweise kann eine Längenbestimmung der Wurzelkanäle mit speziellen Messnadeln und einem Röntgenbild oder durch ein elektrisches Messgerät durchgeführt werden. Dies ist notwendig, um eine Versorgung bis zur Wurzelspitze gewährleisten zu können.

Diese ermittelte maximale Eindringtiefe wird herkömmlicherweise über einen Anschlagring eingestellt, der auf die Instrumente aufgesteckt wird. Der Anschlagring besteht dabei aus einem elastischen Kunststoff, beispielsweise Silikon, und verfügt über eine zentrale Bohrung, in die das Instrument eingeführt wird. Der Anschlagring wird auch Silikon-Stopper oder nur Stopper genannt.

Gemäß dem Stand der Technik wird demnach ein Stopper auf das Instrument geschoben und zwar auf einen Referenzpunkt im Bereich der Zahnkrone. Dieser Referenzpunkt wird auch als koronaler Referenzpunkt bezeichnet. Um die genaue Position des Anschlagsringes auf dem jeweiligen Instrument einzustellen, sind aus dem Stand der Technik eine Vielzahl unterschiedlicher Vorrichtungen bekannt.

Aus der DE 24 16 275 C2 und der DE 34 34 786 C2 sind beispielsweise Messlehren bekannt, die eine Längenskala und an einer wohldefinierten Stelle eine Vertiefung aufweisen, in die der Stopper eingesetzt werden kann. Das Instrument kann nun, falls dies nicht bereits zuvor geschehen ist, durch die zentrale Bohrung des Anschlagrings hindurchgeführt werden und in Erstreckungsrichtung des Instruments verschoben werden, wobei der Stopper relativ zur Längenskala der Messlehre ortsfest bleibt.

Nachteilig hierbei ist, dass das Instrument von Hand soweit durch den Stopper geschoben werden muss, bis die gewünschte Position und die gewünschte Länge der Feile des Instruments erreicht ist. Dies ist mit einer gewissen Ungenauigkeit und nicht ausreichenden Reproduzierbarkeit der maximalen Eindringtiefe des Instruments, das auf bis zu einem viertel Millimeter genau bestimmbar sein sollte, verbunden.

Aus der DE 199 16 114 A1 ist daher eine Einstelllehre zum Einstellen des Tiefenanschlags bekannt, bei der das Instrument durch den Stopper hindurchgeschoben wird, bis es an einen einstellbaren Anschlag stößt. Dadurch wird eine erhöhte Reproduzierbarkeit der eingestellten Länge erreicht.

Aus der JP 10 085 243 A, der US 3,938,253 sowie der US 4,028,810 ist jeweils eine Einstellvorrichtung bekannt, bei der die maximale Eindringtiefe der Wurzelkanalfeile durch einen über eine Gewindestange verstellbaren Anschlag einstellbar ist. Hierdurch kann die Länge besser eingestellt werden.

Die zuvor genannten Vorrichtungen verwenden herkömmliche Silikon-Stopper. Derartige Stopper haben den Nachteil, dass diese Aufgrund ihres flexiblen Materials während der Behandlung verrutschen können, was zu einer Veränderung der maximalen Eindringtiefe führt. Dadurch kommt es während der Wurzelbehandlung häufig zu einer Überinstrumentierung.

Aus der US 5,154,611 ist ein Spender für Silikon-Stopper bekannt, der unterschiedlich lange Silikon-Stopper bevorratet. Diese können jeweils auf ein endodontisches Instrument bis zum Anschlag des Griffs aufgeschoben werden. Hierdurch wird eine definierte Länge der Feile generiert. Damit ist zwar der Nachteil des Verrutschens behoben, jedoch erfüllen derartige Spender nicht das Erfordernis der Sterilität.

Ferner ist es möglich, dass im Laufe einer zahnmedizinischen Behandlung mehrere Wurzelkanäle gereinigt werden müssen, sodass das Instrument auf unterschiedliche maximale Eindringtiefen eingestellt werden muss. Hierfür wird der Stopper händisch verschoben. Dies hat mehrere Nachteile, wie beispielsweise der Kontamination der Instrumente aber auch der Verletzungsgefahr durch das Verschieben des Stoppers. Hierdurch werden für den Patienten unangenehme oder schmerzhafte Behandlungen in die Länge gezogen.

DE 28 57 175 C2 und US 3 781 996 A2 beschreiben je einen Abstandshalter für ein endodontisches Instrument, die unterschiedliche Formen haben. Alle aus dem Stand der Technik bekannten Vorrichtungen und Methoden, die exakte Position eines Anschlagringes auf dem endodontischen Instrument zu bestimmen, einzustellen und diese während der Behandlung beizubehalten, weisen demnach zahlreiche Nachteile auf.

Ausgehend hiervon ist es die Aufgabe der vorliegenden Erfindung, eine Vorrichtung bereitzustellen, mit der die oben geschilderten Nachteile im Stand der Technik überwunden werden können.

Erfindungsgemäß wird die Aufgabe gelöst durch einen Abstandshalter für ein endodontisches Instrument umfassend: eine Grundfläche mit einem Durchmesser (d_{G}), eine Deckfläche mit einem Durchmesser (d_{D}), wobei der Durchmesser (d_{D}) kleiner ist als der Durchmesser (d_{G}), eine Rotationsachse, eine Mantelfläche, eine Höhe (h), eine Öffnung mit einer Längsachse zur Aufnahme eines endodontischen Instruments und eine zylinderförmige Aussparung zur Aufnahme eines Stoppers an der Grundfläche, wobei der Abstandshalter kegelstupfförmig ist, und wobei sich die Öffnung von der Grundfläche bis zur Deckfläche erstreckt, wobei die Längsachse der Öffnung koaxial zur Rotationsachse des Abstandshalters angeordnet ist, und wobei die zylinderförmige Aussparung koaxial zur Öffnung angeordnet ist, und wobei die Grundfläche des Abstandshalters zur Anlage an der Zahnkrone eines Zahnes ausgebildet ist.

Mit dem erfindungsgemäßen Abstandshalter ist es möglich, während einer endodontischen Behandlung die Instrumentenlänge der endodontischen Instrumente exakt und reproduzierbar festzulegen. Mit anderen Worten wird eine Begrenzung bereitgestellt, mit der die Eindringtiefe des Instrumentes genau festgelegt wird und sich während der Behandlung nicht ungewollt ändert.

Hierfür wird während einer endodontischen Behandlung zunächst das endodontische Instrument in die Öffnung des erfindungsgemäßen Abstandshalter geführt und zwar bis zum distalen Ende des Griffs des endodontischen Instruments. Mit anderen Worten wird der Abstandshalter bis zum Anschlag des Griffs des endodontischen Instruments geschoben, sodass die Deckfläche des Abstandshalters an dem Griff anliegt, während die Grundfläche des Abstandshalters bei der Behandlung auf der Zahnkrone liegt.

Der Abstandshalter kann erfindungsgemäß in verschiedenen Höhen ausgestaltet sein. Durch die Wahl der Höhe des Abstandshalters wird vor der Behandlung eine maximale Bearbeitungslänge bzw. maximale Eindringtiefe des endodontischen Instruments genau festgelegt. Somit werden bei großen Höhen entsprechend kleine Arbeitslängen erreicht, während bei kleinen Höhen eine entsprechend größere Arbeitslänge erreicht werden kann.

Ein Verrutschen des Stoppers, sodass es zu einer Überinstrumentierung kommt, wie es aus dem Stand der Technik bekannt ist, wird durch die Erfindung verhindert, da das endodontische Instrument nur um die an dem Abstandshalter anschließende, übrigbleibende Länge in den Zahn eingeführt werden kann.

Die Erfindung bietet außerdem den Vorteil, dass aufgrund der konischen Form des Abstandshalters ein schnelles Wechseln der Abstandshalter während der Behandlung möglich ist. Dies ist insbesondere notwendig, wenn eine neue bzw. weitere Eindringtiefe eingestellt werden soll.

Zum einen ist der Abstandshalter größer als herkömmliche Stopper, sodass es einem behandelnden Arzt leichter fällt, den Abstandshalten vom endodontischen Instrument zu lösen.

Ferner kann vorteilhafterweise mit der Entfernung des Abstandshalter von dem endodontischen Instrument immer auch der Stopper (sofern vorhanden) von dem Instrument gelöst werden.

Es wird unter einem "endodontischen Instrument" jedes Instrument verstanden, welches bei einer endodontischen Behandlung verwendet wird, insbesondere K-Feilen, Reamer und Hedströmfeilen aus Cr-Ni-Endelstahl. Im ISO-Standard sind alle Längen, Stärken, Dimensionen, Toleranzen und Mindestanforderungen an die mechanische Belastbarkeit definiert. Der Durchmesser an der Instrumentenspitze entspricht der Größe 1/100mm. Die Länge des konisch ansteigenden Arbeitsteils beträgt 16mm unabhängig von der Gesamtinstrumentenlänge. Alle Instrumente haben ein konisches Arbeitsteil, das pro Millimeter um 0,02mm im Durchmesser anwächst, d.h. am Ende des Arbeitsteils sind die Instrumente um 0,32mm stärker. Neuere Instrumente aus Nickel-Titan besitzen neben der 02er-Konizität auch stärker ansteigende konische Instrumentenformen: z.B. 04, 06, 10 und 12. Zur Erleichterung des Instrumentengebrauchs sind die Instrumentengriffe farbcodiert.

Hier umfasst ein "endodontisches Instrument" auch ein zahnärztliches Bohrinstrument.

Es wird unter einem "Stopper" ein Ring aus einem geeigneten Material, vorzugsweise aus Kunststoff bzw. Gummi verstanden, der formschlüssig um das endodontische Instrument angebracht werden kann. Diese werden auch als Silikon-Stopper, Endo-Stopper oder Endo-Stops bezeichnet. Im Stand der Technik sind derartige Stopper bekannt und werden üblicherweise bei der endodontischen Behandlung verwendet. Diese Stopper sind erhältlich in diversen Größen, wobei die übliche Größe einen Durchmesser von 3,5 mm und einer Stärke/Höhe von 1 mm aufweist.

Hier ist die Öffnung zur Aufnahme eines endodontischen Instruments, derart gestaltet, dass die Öffnung mindestens einen gleich großen Durchmesser aufweist, wie der Querschnitt des endodontischen Instruments, welches in die Öffnung eingeführt wird.

Die Öffnung kann eine kreisrunde Bohrung sein. Die Öffnung kann erfindungsgemäß auch andere Formen aufweisen, beispielsweise dreieckig, viereckig oder mehreckig.

Gemäß einer bevorzugten Ausführungsform des erfindungsgemäßen Abstandshalters weist die zylinderförmige Aussparung zur Aufnahme eines Stoppers ein Volumen auf, das dem Volumen eines Stoppers entspricht.

Diese Ausführungsform hat den Vorteil, dass bereits bekannte, etablierte Techniken mit der Erfindung verknüpft werden können. Hierfür weist der erfindungsgemäße Abstandshalter eine zylinderförmige Aussparung auf, in die ein Stopper lückenlos bzw. formschlüssig aufgenommen werden kann. Diese Ausführungsform bietet außerdem den Vorteil, dass ein Stopper den Abstandshalter an dem endodontischen Instrument zusätzlich fixieren kann.

Gemäß einer bevorzugten Ausführungsform des erfindungsgemäßen Abstandshalters weist die zylinderförmige Aussparung zur Aufnahme eines Stoppers einen Durchmesser auf, der bei 2,0 mm bis 5,0 mm liegt, vorzugsweise bei 2,0, 2,5, 3,0, 3,5, 4,0, 4,5, oder 5,0 mm.

In einer weiteren Ausführungsform des erfindungsgemäßen Abstandshalters weist die zylinderförmige Aussparung zur Aufnahme eines Stoppers eine Höhe auf, die bei 0,5 mm bis 2,0 mm liegt, vorzugsweise bei 0,5, 1,0, 1,5 oder 2,0 mm.

Die im Stand der Technik bekannten Stopper weisen unterschiedliche Höhen/Dicken sowie unterschiedliche Durchmesser auf. Diese Ausführungsformen bieten daher den Vorteil, dass jegliche Stopper mit dem erfindungsgemäßen Abstandshalter kombiniert werden können.

Gemäß einer bevorzugten Ausführungsform des erfindungsgemäßen Abstandshalters liegt der Durchmesser (d_{G}) bei 5,0 mm bis 15,0 mm, vorzugsweise bei 5,0, 5,5, 6,0, 6,5, 7,0, 7,5, 8,0, 8,5, 9,0, 9,5, 10,0, 10,5, 11,0, 11,5, 12,0 ,12,5, 13,0 13,5, 14,0, 14,5 oder 15,0 mm.

Hier entspricht der Durchmesser der Grundfläche in etwa dem Durchmesser der Zahnkrone oder der Restauration des zu behandelnden Zahns. Der Durchmesser ist dabei derart gewählt, dass der Abstandshalter auf den jeweiligen Zahnkronen aufliegt. Ein zu gering gewählter Durchmesser kann dazu führen, dass der Abstandshalter nicht auf der Zahnkrone aufliegt, sondern beispielsweise in den Zahnfissuren. Ein zu groß ausgewählter Durchmesser kann dazu führen, dass der Abstandshalter auf benachbarten Zähnen des zu behandelnden Zahns aufliegt. Demnach können falsch ausgewählte Durchmesser zu einer Fehlbehandlung führen.

Hier liegen einem zu behandelnden Arzt während der Behandlung zahlreiche erfindungsgemäße Abstandshalter in diversen Größen vor. Ein Fachmann wird in Abhängigkeit der Beschaffenheit des zu behandelnden Zahns einen geeigneten Abstandshalter auswählen können.

Gemäß einer bevorzugten Ausführungsform des erfindungsgemäßen Abstandshalters liegt die Höhe (h) bei ca. 0,75 mm bis ca. 15 mm, vorzugsweise bei ca. 0,75, 1,0, 1,5, 2,0, 2,5, 3,0, 3,5, 4,0, 4,5, 5,0, 6,0, 7,0, 8,0, 9,0, 10,0, 11,0, 12,0 13,0 14,0 oder ca. 15,0 mm.

Die Höhe des Abstandshalters gibt die maximale Eindringtiefe des endodontischen Instruments bei der Behandlung des Zahns vor. Erfindungsgemäß liegen einem Arzt diverse Abstandshalter unterschiedlicher Höhe zur Verfügung, um die exakte Arbeitslänge des endodontischen Instruments einstellen zu können.

Um die exakte Arbeitslänge einstellen zu können, kann der Abstandshalter erfindungsgemäß ergänzt werden durch zusätzliche Scheiben mit einer Öffnung zur Aufnahme endodontischer Instrumente. Diese Scheiben dienen der Feinvergrößerung des Abstandshalters über die Höhe (h) hinaus.

Diese Scheiben können eine Höhe von ≤ 0,5 mm vorliegen. Mögliche Dicken/Höhen können dabei ca. 0,1, 0,15, 0,2, 0,25, 0,3, 0,35 0,4, 0,45 oder ca. 0,5 mm sein. Diese Scheiben können bei der Behandlung entweder an der Grundfläche oder an der Deckfläche des Abstandshalters anliegen.

Neben den Scheiben können erfindungsgemäß auch mehrere Abstandshalter hintereinander auf das endodontische Instrument aufgeschoben werden, um die gewünschte bzw. exakte Arbeitslänge einstellen zu können.

Diese Ausführungsform bietet den Vorteil, dass jegliche Arbeitsgrößen des endodontischen Instruments eingestellt werden können; entweder durch die Verwendung eines Abstandshalters einer definierten Höhe oder der Kombination aus mehreren Abstandshalter oder der Kombination aus Abstandshalter und zusätzlicher Scheiben.

Gemäß einer bevorzugten Ausführungsform des erfindungsgemäßen Abstandshalters weist die Öffnung zur Aufnahme eines endodontischen Instruments einen Durchmesser (d_{O}) von ≤ 2,0 mm auf, vorzugsweise ca. 2,0, 1,9, 1,8, 1,7, 1,6, 1,5, 1,4, 1,3, 1,2, 1,1, 1,0, 0,9, 0,8, 0,75 0,7, 0,65, 0,6, 0,55, 0,5, 0,45, 0,4, 0,35, 0,3, 0,25, 0,2 oder ca. 0,15 mm.

Endodontische Instrumente werden üblicherweise in unterschiedlichen Dicken bzw. in unterschiedlichen Durchmessern angeboten. Dies ist notwendig, da auch die Wurzelkanäle einen unterschiedlichen Durchmesser aufweisen.

Diese Ausgestaltung hat den Vorteil, dass sämtliche endodontische Instrumente mit dem erfindungsgemäßen Abstandshalter kombiniert werden können.

Gemäß einer bevorzugten Ausführungsform des erfindungsgemäßen Abstandshalters liegt der Durchmesser (d_{D}) bei 2,5 mm bis 15,0 mm, vorzugsweise bei 2,5, 3,0, 3,5, 4,0, 4,5, 5,0, 5,5, 6,0, 6,5, 7,0, 7,5, 8,0, 9,0, 9,5, 10, 10,5, 11, 11,5, 12, 12,5, 13, 13,5, 14, 14,5 oder 15,0 mm.

Diese Ausführungsform hat den Vorteil, dass der Abstandshalter nicht wesentlich größer ist als der zu behandelnder Zahn. Dies hat den Vorteil, dass der Zahnarzt eine gute Sicht auf den zu behandelnden Zahn hat.

Bevorzugt ist der Abstandshalter aus einem Material gefertigt, welches formstabil ist. Ferner sollte das Material chemisch inert sein und bei hohen Temperaturen und Drücken formstabil bleiben. Dies ist besonders vorteilhaft, da der Abstandhalter somit leicht sterilisiert werden kann. Ferner sollte das Material gegenüber Bakterien, Viren oder Pilzen inert sein.

Gemäß einer bevorzugten Ausführungsform des erfindungsgemäßen Abstandshalters ist der Abstandshalter aus Metall, Kunststoff, Silicon, oder deren Kombination, vorzugsweise PEEK (Polyetheretherketon), PPSU, POM-C oder Edelstahl hergestellt.

Diese Ausführungsform bietet den Vorteil, dass sämtliche Materialien gut sterilisierbar sind. Dies hat den Vorteil, dass die Abstandshalter mehrfach verwendet werden können. Dies wiederrum kann zu einer Kostenersparnis führen.

Die Materialien bieten ferner den Vorteil, dass der Abstandshalter bei der Herstellung gegossen werden kann, was eine kostengünstige Herstellung ermöglicht.

Gemäß einer bevorzugten Ausführungsform des erfindungsgemäßen Abstandshalters weist der Abstandshalter einen Marker auf, der die Höhe (h) angibt.

Es werden unter Marker sämtliche Hinweise verstanden, die einem zu behandelndem Arzt schnell und sicher anzeigen können, welche Höhe der jeweilige Abstandshalter aufweist.

Derartige Marker können Aufdrucke sein; beispielsweise können die jeweiligen Höhen in Zahlen oder Grafiken auf dem Abstandshalter gedruckt sein. Ferner kann die Höhenangabe auch eingraviert oder eingestanzt sein. Erfindungsgemäß kann die Höhe auch angegeben werden durch einen Farbcode. Hierbei können die Abstandshalter je nach Höhe in unterschiedlichen Farben eingefärbt sein oder aus einem eingefärbten Material bestehen.

Eine Farbcodierung ist bei endodontischen Instrumenten üblich geworden, sodass die Markierung mittels Farben eine bevorzugte Ausführungsform darstellt.

Es wird weiterhin definiert eine Vorrichtung zur Bereitstellung des erfindungsgemäßen Abstandshalter aufweisend: einen Körper, der zumindest eine Aussparung zur zumindest teilweisen formschlüssigen Aufnahme des Abstandshalters aufweist.

In diese Vorrichtung kann der Abstandshalter schnell und sicher eingeführt und ggf. wieder herausgenommen werden. In diese Vorrichtung kann der Abstandshalter auch eingeführt und verklemmt werden, wenn dieser auf einem endodontischen Instrument gesteckt ist. Anschließend lässt sich das endodontische Instrument sicher von dem erfindungsgemäßen Abstandshalter trennen und ggf. in einen weiteren Abstandshalter mit anderen Ausmaßen führen. Hierdurch wird ein schnelles und sicheres Wechseln des Abstandshalters auf dem endodontischen Instrument ermöglicht.

Besonders vorteilhaft an dieser Vorrichtung ist, dass der zu behandelnde Arzt während einer endodontischen Behandlung den Abstandshalter auf das endodontische Instrument aufsetzen und ggf. wechseln kann, ohne dass dieser den Abstandshalter in die Hand nehmen muss. Dies führt im Stand der Technik regelmäßig zu ungewollten Kontaminationen, da der Arzt den ursprünglich sterilisierten Stopper händisch verschieben muss.

Die Aussparung dieser Vorrichtung ist vorteilhafterweise derart ausgestaltet, dass der Abstandshalter leicht in die Vorrichtung eingeführt werden kann und sich in dieser verklemmen kann. Insbesondere ist bevorzugt, wenn die Aussparung derart ausgestaltet ist, dass sich der Abstandshalter nur in seitlicher Richtung aus der Vorrichtung einführen und lösen lässt und nicht senkrecht dazu nach oben oder unten.

Hier kann die Vorrichtung mehrere Aussparungen aufweisen, bspw. 2, 3, 4, 5, 6, 7, 8, 9, 10, 20, 30, 40 usw. Gemäß dieser Ausgestaltung können beispielsweise mehrere Abstandshalter unterschiedlicher Größen in den jeweiligen Aussparungen der Vorrichtung bevorratet sein. Dies hat den Vorteil, dass der zu behandelnde Arzt schnell den Abstandshalter vom endodontischen Instrument wechseln kann.

Bei der Vorrichtung ist die Aussparung kegelstupfförmig oder pyramidenstupfförmig ausgestaltet.

Es bietet den Vorteil, dass der Abstandshalter passgenau in die Vorrichtung eingeführt werden kann, da diese kegelstupfförmig ausgestaltet ist.

Bei der Vorrichtung ist die zumindest teilweise formschlüssige Aufnahme derart ausgebildet, dass der Abstandshalters in Klemmverbindung in der zumindest einen Aussparung sitzt.

Es hat den Vorteil, dass der Abstandshalter seitlich in die Vorrichtung nämlich in die Aussparung eingeschoben werden kann. In dieser verklemmt sich der Abstandshalter, sodass sich dieser nicht zu anderen Seiten, beispielsweise nach oben oder nach unten, lösen kann.

Bei der Vorrichtung weist diese im Bereich der Aussparung eine sich zum Rand des Körpers hin erstreckende spaltförmige Öffnung im Boden des Körpers auf, die zur Aufnahme eines endodontischen Instruments ausgebildet ist.

Bei der Vorrichtung weist die spaltförmige Öffnung einen Durchmesser von ≤ 2,0 mm auf, vorzugsweise von ca. 2,0, 1,9, 1,8, 1,7, 1,6, 1,5, 1,4, 1,3, 1,2, 1,1, 1,0, 0,9, 0,8, 0,75 0,7, 0,65, 0,6, 0,55, 0,5, 0,45, 0,4, 0,35, 0,3, 0,25, 0,2 oder ca. 0,15 mm.

Es haben den Vorteil, dass der Abstandshalter meist in Zusammenhang mit einem endodontischen Instrument in die Vorrichtung geschoben wird. Die spaltförmige Öffnung ermöglicht demnach einen einfachen und sicheren Wechsel des Abstandshalters vom endodontischen Instrument.

Hier ist die spaltförmige Öffnung demnach derart ausgestaltet, dass ein endodontisches Instrument in der spaltförmige Öffnung genügend Platz hat und nicht wie der Abstandshalter selbst mit eingeklemmt wird.

Es wird die Aufgabe ferner gelöst durch ein Kit zur Verwendung während einer endodontischen Behandlung, aufweisend eine Vorrichtung und einen erfindungsgemäßen Abstandshalter.

Gemäß einer Ausgestaltung des Kits weist das Kit eine Scheibe zur Feinvergrößerung des Abstandshalters auf, wobei die Scheibe eine Höhe von ≤ 0,5 mm aufweist.

Weitere Vorteile ergeben sich aus den Figuren und der nachstehenden Beschreibung bevorzugter Ausführungsbeispiele.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden nachfolgend näher erläutert. Es zeigen:
- Fig. 1: eine Seitenansicht eines erfindungsgemäßen Abstandshalters;
- Fig. 2: eine Seitenansicht eines endodontischen Instruments, das sich in einen Zahn hineinerstreckt und einen die Eindringtiefe begrenzenden Abstandhalter aufweist;
- Fig. 3: eine Seitenansicht eines endodontischen Instruments, das sich in einen Zahn hineinerstreckt und ein die Eindringtiefe begrenzenden Abstandhalter sowie eine zusätzliche Scheibe aufweist;
- Fig. 4: eine perspektivische Sicht auf die erfindungsgemäße Vorrichtung;
- Fig. 5: eine Seitenansicht eines Ausschnitts einer erfindungsgemäßen Vorrichtung; und
- Fig. 6: eine Seitenansicht eines Ausschnitts einer erfindungsgemäßen Vorrichtung mit einem erfindungsgemäßen Abstandshalter und einem endodontischen Instrument.

Funktionsäquivalente Elemente werden in allen Figuren, auch bei unterschiedlichen Ausführungsformen, mit den gleichen Bezugszeichen gekennzeichnet.

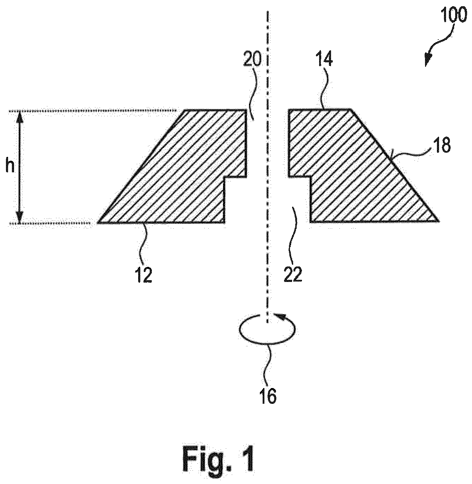

Fig. 1 zeigt einen erfindungsgemäßen Abstandshalter 100 für ein endodontisches Instrument 10. Der Abstandshalter 100 ist kegelstupfförmig ausgestaltet und weist eine Rotationsachse 16 auf. Der Abstandshalter 100 ist dadurch gekennzeichnet, dass dieser eine Grundfläche 12, eine Deckfläche 14, eine Mantelfläche 18 und eine Höhe h aufweist. Die Deckfläche 14 ist hierbei kleiner als die Grundfläche 12.

Ferner weist der Abstandshalter 100 eine Öffnung 20 zur Aufnahme eines endodontischen Instruments 10 auf, wobei sich die Öffnung 20 von der Grundfläche 12 bis zur Deckfläche 14 erstreckt. Die Öffnung 20 weist ferner eine Längsachse auf, wobei die Längsachse der Öffnung 20 koaxial zur Rotationsachse 16 des Abstandshalters 100 angeordnet ist.

Außerdem weist der Abstandshalter 100 eine zylinderförmige Aussparung 22 zur Aufnahme eines Stoppers 24 an der Grundfläche 12 auf, wobei die zylinderförmige Aussparung 22 koaxial zur Öffnung 20 angeordnet ist.

Hier kann der Abstandshalter 100 variabel in seiner Größe ausgestaltet sein. Dies ist vorteilhaft, da der Abstandshalter 100 in Abhängigkeit des zu behandelndem Zahns und insbesondere seiner Zahnwurzellänge ausgewählt wird. Variabel ist hierbei der Durchmesser der Grundfläche 12, der Durchmesser der Deckfläche 14, der Durchmesser der Öffnung 20, der Durchmesser der zylinderförmigen Aussparung 22, sowie die Höhe h des Abstandshalters 100 und die Höhe der zylinderförmigen Aussparung 22.

Der Abstandshalter 100 ist bevorzugt aus Materialien hergestellt, die sich leicht sterilisieren lassen, formstabil und chemisch inert sind.

Der Abstandshalter 100 kann Marker aufweisen, die die Höhe des Abstandshalters 100 angeben (nicht gezeigt). Dies kann beispielsweise erreicht werden durch eine Farbcodierung auf dem Abstandshalter 100 oder einer gänzlichen Einfärbung des Abstandshalters 100.

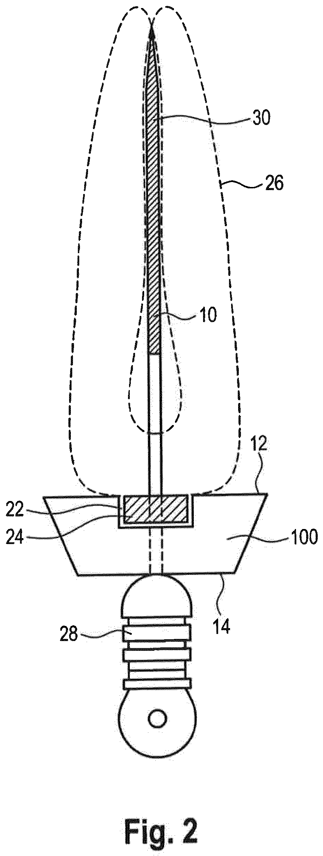

Fig. 2 zeigt eine Seitenansicht eines endodontischen Instruments 10, welches sich in einen Zahn 26 hineinerstreckt und ein die Eindringtiefe begrenzenden Abstandhalter 100 aufweist.

Wie aus Fig. 2 erkennbar ist, weist das endodontische Instrument 10 eine langgestreckte Form auf. Es ist zusammengesetzt aus einem Griff 28 und einem Behandlungskopf 30, der üblicherweise den Bohrkopf oder die Feile darstellt. Das endodontische Instrument 10 erstreckt sich in der Fig. 2 in den Wurzelkanal des Zahns 26 bis zum apikalsten Ende des Zahns 26.

Der Abstandshalter 100 ist hierbei derart angeordnet, dass die Grundfläche 12 an der Zahnkrone des Zahns 14 anliegt und die Deckfläche 14 an dem distalen Ende des Griffs 28. Hierdurch wird die maximale Eindringtiefe des endodontischen Instruments 10 durch die Höhe des Abstandshalter 100 festgelegt.

Ferner ist in Fig. 2 ein Stopper 24 gezeigt, der in der zylinderförmigen Aussparung 22 des Abstandshalters 100 aufgenommen ist. Der Stopper 24 kann vorteilhafterweise dazu genutzt werden, den Abstandshalter 100 fest an dem endodontischen Instrument 10 zu fixieren.

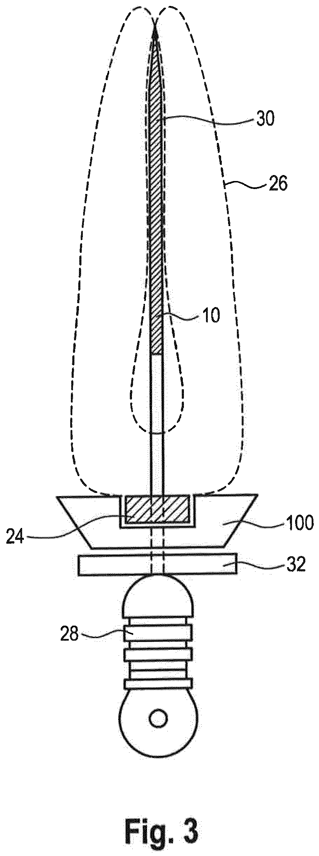

Fig. 3 unterscheidet sich von Fig. 2 durch eine zusätzliche Scheibe 32, die zwischen dem Griff 28 des endodontischen Instruments 10 und der Deckfläche 14 des Abstandshalters 100 liegt. Erfindungsgemäß kann die Scheibe 32 auch zwischen der Zahnkrone und der Grundfläche 12 des Abstandshalter 100 angeordnet sein (nicht gezeigt).

Die Scheibe 32 ist vorteilhaft, da mit ihr die Eindringtiefe feinjustiert werden kann. Im Gegensatz zum Abstandshalter 100 kann die Scheibe 32 auch sehr kleine Höhen von beispielsweise ≤ 0,5 mm aufweisen.

Es können auch mehrere Scheiben 32 und mehrere Abstandhalter 100 hintereinander auf dem endodontischen Instrument 10 angelagert sein, um eine gewünschte Arbeitslänge des endodontischen Instruments 10 zu erreichen.

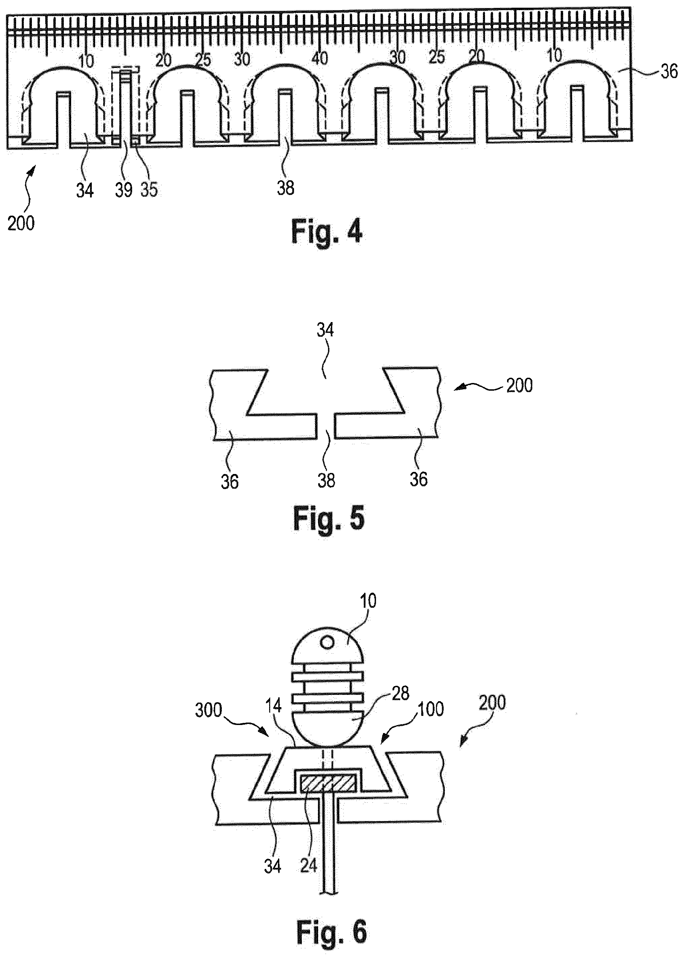

Fig. 4 zeigt eine Perspektivische Sicht auf eine Vorrichtung 200. Sie zeigt eine Vorrichtung 200 zur Bereitstellung eines erfindungsgemäßen Abstandshalters 100, wobei die Vorrichtung 200 eine Aussparung 34 zur zumindest teilweisen formschlüssigen Aufnahme des Abstandshalters 100 aufweist.

Die in Fig. 4 gezeigte Vorrichtung 200 weist sechs Aussparungen 34 in einem Körper 36 auf, in die jeweils ein Abstandshalter 100 (nicht gezeigt) aufgenommen werden kann. Die Aussparungen 34 sind dabei dergestalt, dass diese zum Teil pyramidenstupfförmig und zum Teil kegelstumpfförmig ausgestaltet sind, wobei die Aussparung 34 zum Rand pyramidenstupfförmig ausgestaltet ist.

In die Aussparung 34 lässt sich der Abstandshalter 100 zumindest teilweise formschlüssig aufnehmen. Der Abstandshalter 100 kann hierbei in Klemmverbindung aufgenommen werden.

Die Aussparung 34 weist ferner eine sich zum Rand des Körpers 36 hin erstreckende spaltförmige Öffnung 38 im Boden des Körpers 36 auf, die zur Aufnahme eines endodontischen Instruments 10 ausgebildet ist.

In der Vorrichtung 200 ist ferner eine weitere Aussparung 35 zur Aufnahme des Stoppers 24 (nicht gezeigt) vorgesehen. Dabei ist die weitere Aussparung 35 so ausgebildet, dass der Stopper 24 zumindest teilweise formschlüssig, vorzugsweise in Klemmverbindung aufgenommen werden kann. Die weitere Aussparung 35 weist eine sich zum Rand des Körpers hin erstreckende spaltförmige weitere Öffnung 39 auf.

Die Vorrichtung 200 erlaubt die einfache Entnahme sowohl des Abstandshalters 100 als auch des Stoppers 24 aus der Aussparung 34 bzw. weiteren Aussparung 35. Dazu wird das endodontische Instrument 10 (nicht gezeigt) von oben zunächst durch die zentrale Öffnung des sich in der Aussparung 34 befindlichen Abstandshalters 100 und die im Boden des Körpers 36 spaltförmige Öffnung 38 geführt, bis der Abstandshalter 100 auf dem Schaft des endodontischen Instruments 10 sitzt. Im nächsten Schritt wird dann auf entsprechende Art und Weise der Stopper 24 aus der weiteren Aussparung 35 entnommen und anschließend in die zylinderförmige Aussparung 22 des Abstandshalters 100 eingedrückt. Die Ablage des Abstandshalters 100 bzw. Stoppers 24 kann durch umgekehrte Vorgehensweise erfolgen.

Fig. 5 zeigt eine Seitenansicht eines Ausschnitts einer Vorrichtung 200. Zu sehen ist die Vorrichtung 200 zur Bereitstellung des erfindungsgemäßen Abstandshalter 100. Fig. 4. und Fig. 5 zeigen die gleiche Ausgestaltung der Vorrichtung 200 und unterscheiden sich lediglich in der Perspektive.

Fig. 6 zeigt eine Seitenansicht eines Ausschnitts einer Vorrichtung 200 mit einem erfindungsgemäßen Abstandshalter 100 und einem endodontischen Instrument 10.

Das endodontische Instrument 10 ist hierbei durch den Abstandshalter 100 und den Stopper 24 geführt, wobei der Abstandshalter 100 mit seiner Deckfläche 14 am Griff 28 des endodontischen Instruments 10 anliegt. Die Grundfläche 12 des Abstandshalter 100 liegt dagegen auf dem Körper 36 der Vorrichtung 200 auf, wobei der Abstandshalter 100 in der Aussparung 34 der Vorrichtung 200 formschlüssig aufgenommen ist. Ferner ist auch der Stopper 24 in der zylinderförmigen Aussparung 22 des Abstandshalters 100 aufgenommen.

Angenommen das endodontische Instrument 10 würde aus dem Abstandshalter 100 gezogen werden, so würden der Abstandshalter 100 und der Stopper 24 in der Vorrichtung 200 verbleiben, da diese in Klemmverbindung mit der Vorrichtung 200 verbunden sind.

## Patentansprüche

1. Abstandshalter (100) für ein endodontisches Instrument (10) umfassend: eine Grundfläche (12) mit einem Durchmesser (d_{G}), eine Deckfläche (14) mit einem Durchmesser (d_{D}), wobei der Durchmesser (d_{D}) kleiner ist als der Durchmesser (d_{G}), eine Rotationsachse (16), eine Mantelfläche (18), eine Höhe (h), eine Öffnung (20) mit einer Längsachse zur Aufnahme eines endodontischen Instruments (10) und eine zylinderförmige Aussparung (22) zur Aufnahme eines Stoppers (24) an der Grundfläche (12), wobei der Abstandshalter (100) kegelstupfförmig ist, und wobei sich die Öffnung (20) von der Grundfläche (12) bis zur Deckfläche (14) erstreckt, wobei die Längsachse der Öffnung (20) koaxial zur Rotationsachse (16) des Abstandshalters (100) angeordnet ist, und wobei die zylinderförmige Aussparung (22) koaxial zur Öffnung (20) angeordnet ist, und wobei die Grundfläche (12) des Abstandshalters (100) zur Anlage an der Zahnkrone eines Zahns ausgebildet ist.

2. Abstandshalter (100) nach Anspruch 1, **dadurch gekennzeichnet, dass** die zylinderförmige Aussparung (22) zur Aufnahme eines Stoppers (24) ein Volumen aufweist, das dem Volumen eines Stoppers (24) entspricht.

3. Abstandshalter (100) nach Anspruch 1 oder 2, **dadurch gekennzeichnet, dass** die zylinderförmige Aussparung (22) zur Aufnahme eines Stoppers (24) einen Durchmesser aufweist, der bei 2,0 mm bis 5,0 mm liegt, vorzugsweise bei 2,0, 2,5, 3,0, 3,5, 4,0, 4,5, oder 5,0 mm, und/oder vorzugsweise eine Höhe aufweist, die bei 0,5 mm bis 2,0 mm liegt, vorzugsweise bei 0,5, 1,0, 1,5 oder 2,0 mm.

4. Abstandshalter (100) nach einem der Ansprüche 1 bis 3, **dadurch gekennzeichnet, dass** der Durchmesser (d_{G}) bei 5,0 mm bis 15,0 mm liegt, vorzugsweise bei 5,0, 5,5, 6,0, 6,5, 7,0, 7,5, 8,0, 8,5, 9,0, 9,5, 10,0, 10,5, 11,0, 11,5, 12,0 ,12,5, 13,0 13,5, 14,0, 14,5 oder 15,0 mm, und/oder vorzugsweise dass die Höhe (h) bei 0,75 mm bis 15 mm liegt, vorzugsweise bei 0,75, 1,0, 1,5, 2,0, 2,5, 3,0, 3,5, 4,0, 4,5, 5,0, 6,0, 7,0, 8,0, 9,0, 10,0, 11,0, 12,0 13,0 14,0 oder 15,0 mm.

5. Abstandshalter (100) nach einem der Ansprüche 1 bis 4, **dadurch gekennzeichnet, dass** die Öffnung (20) zur Aufnahme eines endodontischen Instruments (10) einen Durchmesser (d_{O}) von ≤ 2,0 mm aufweist, vorzugsweise 2,0, 1,9, 1,8, 1,7, 1,6, 1,5, 1,4, 1,3, 1,2, 1,1, 1,0, 0,9, 0,8, 0,75 0,7, 0,65, 0,6, 0,55, 0,5, 0,45, 0,4, 0,35, 0,3, 0,25, 0,2 oder 0,15 mm.

6. Abstandshalter (100) nach einem der Ansprüche 1 bis 5, **dadurch gekennzeichnet, dass** der Durchmesser (d_{D}) bei 2,5 mm bis 10,0 mm liegt, vorzugsweise bei 2,5, 3,0, 3,5, 4,0, 4,5, 5,0, 5,5, 6,0, 6,5, 7,0, 7,5, 8,0, 9,0, 9,5 oder 10,0 mm.

7. Abstandshalter (100) nach einem der Ansprüche 1 bis 6, **dadurch gekennzeichnet, dass** dieser aus Metall, Kunststoff, Silicon, oder deren Kombination, vorzugsweise PEEK (Polyetheretherketon), PPSU, POM-C oder Edelstahl hergestellt ist.

8. Abstandshalter (100) nach einem der Ansprüche 1 bis 7, **dadurch gekennzeichnet, dass** dieser einen Marker aufweist, der die Höhe (h) angibt.

9. Kit (300) zur Verwendung in einer endodontischen Behandlung, aufweisend einen Abstandshalter (100) nach einem der Ansprüche 1 bis 8 und eine Vorrichtung (200) zur Bereitstellung des Abstandshalters (100).

10. Kit (300) nach Anspruch 9, **dadurch gekennzeichnet, dass** das Kit (300) eine Scheibe (32) zur Feinvergrößerung des Abstandshalters (100) aufweist, wobei die Scheibe (32) eine Höhe von ≤ 0,5 mm aufweist.

## Claims

1. A spacer (100) for an endodontic instrument (10) comprising: a base surface (12) with a diameter (d_{G}), a top surface (14) with a diameter (d_{D}), wherein the diameter (d_{D}) is smaller than the diameter (d_{G}), a rotation axis (16), a lateral surface (18), a height (h), an opening (20) with a longitudinal axis for receiving an endodontic instrument (10), and a cylindrical recess (22) for receiving a stopper (24) at the base surface (12), wherein the spacer (100) is frustum-shaped, and wherein the opening (20) extends from the base surface (12) to the top surface (14), wherein the longitudinal axis of the opening (20) is arranged coaxially to the rotation axis (16) of the spacer (100), and wherein the cylindrical recess (22) is arranged coaxially to the opening (20), and wherein the base surface (12) of the spacer (100) is configured to abut a tooth crown of a tooth.

2. The spacer (100) according to claim 1, **characterized in that** the cylindrical recess (22) for receiving a stopper (24) has a volume corresponding to the volume of a stopper (24).

3. The spacer (100) according to claim 1 or 2, **characterized in that** the cylindrical recess (22) for receiving a stopper (24) has a diameter ranging from 2.0 mm to 5.0 mm, preferably 2.0, 2.5, 3.0, 3.5, 4.0, 4.5, or 5.0 mm, and/or preferably a height ranging from 0.5 mm to 2.0 mm, preferably 0.5, 1.0, 1.5, or 2.0 mm.

4. The spacer (100) according to any one of claims 1 to 3, **characterized in that** the diameter (d_{G}) ranges from 5.0 mm to 15.0 mm, preferably 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5 or 15.0 mm, and/or preferably the height (h) ranges from 0.75 mm to 15 mm, preferably 0.75, 1.0, 1.5, 2.0, 2.5, 3.0, 3.5, 4.0, 4.5, 5.0, 6.0, 7.0, 8.0, 9.0, 10.0, 11.0, 12.0, 13.0, 14.0 or 15.0 mm.

5. The spacer (100) according to any one of claims 1 to 4, **characterized in that** the opening (20) for receiving an endodontic instrument (10) has a diameter (d_{O}) of ≤ 2.0 mm, preferably 2.0, 1.9, 1.8, 1.7, 1.6, 1.5, 1.4, 1.3, 1.2, 1.1, 1.0, 0.9, 0.8, 0.75, 0.7, 0.65, 0.6, 0.55, 0.5, 0.45, 0.4, 0.35, 0.3, 0.25, 0.2 or 0.15 mm.

6. The spacer (100) according to any one of claims 1 to 5, **characterized in that** the diameter (d_{D}) ranges from 2.5 mm to 10.0 mm, preferably 2.5, 3.0, 3.5, 4.0, 4.5, 5.0, 5.5, 6.0, 6.5, 7.0, 7.5, 8.0, 9.0, 9.5 or 10.0 mm.

7. The spacer (100) according to any one of claims 1 to 6, **characterized in that** it is made of metal, plastic, silicone, or combinations thereof, preferably PEEK (poly-etheretherketone), PPSU, POM-C, or stainless steel.

8. The spacer (100) according to any one of claims 1 to 7, **characterized in that** it comprises a marker indicating the height (h).

9. A kit (300) for use in an endodontic treatment, comprising a spacer (100) according to any one of claims 1 to 8 and a device (200) for providing the spacer (100).

10. The kit (300) according to claim 9, **characterized in that** the kit (300) comprises a disc (32) for fine enlargement of the spacer (100), wherein the disc (32) has a height of ≤ 0.5 mm.

## Revendications

1. Ecarteur (100) pour un instrument endodontique (10) comprenant : une surface de base (12) avec un diamètre (d_{G}), une surface de couverture (14) avec un diamètre (d_{D}), dans lequel le diamètre (d_{D}) est inférieur au diamètre (d_{G}), un axe de rotation (16), une surface d'enveloppe (18), une hauteur (h), une ouverture (20) avec un axe longitudinal pour la réception d'un instrument endodontique (10) et un évidement cylindrique (22) pour recevoir une butée (24) sur la surface de base (12), dans lequel l'écarteur (100) est tronconique, et dans lequel l'ouverture (20) s'étend de la surface de base (12) à la surface de couverture (14), dans lequel l'axe longitudinal de l'ouverture (20) est disposé coaxialement par rapport à l'axe de rotation (16) de l'écarteur (100), et dans lequel l'évidement cylindrique (22) est disposé coaxialement à l'ouverture (20), et dans lequel la surface de base (12) de l'écarteur (100) est réalisée pour être en appui sur la couronne dentaire d'une dent.

2. Ecarteur (100) selon la revendication 1, **caractérisé en ce que** l'évidement cylindrique (22) pour la réception d'une butée (24) présente un volume qui correspond au volume d'une butée (24).

3. Ecarteur (100) selon la revendication 1 ou 2, **caractérisé en ce que** l'évidement cylindrique (22) pour la réception d'une butée (24) présente un diamètre qui est de 2,0 mm à 5,0 mm, de préférence de 2,0, 2,5, 3,0, 3,5, 4,0, 4,5 ou 5,0 mm, et/ou présente de préférence une hauteur qui est de 0,5 mm à 2,0 mm, de préférence de 0,5, 1,0, 1,5 ou 2,0 mm.

4. Ecarteur (100) selon l'une quelconque des revendications 1 à 3, **caractérisé en ce que** le diamètre (d_{G}) est de 5,0 mm à 15,0 mm, de préférence de 5,0, 5,5, 6,0, 6,5, 7,0, 7,5, 8,0, 8,5, 9,0, 9,5, 10,0, 10,5, 11,0, 11,5, 12,0, 12,5, 13,0, 13,5, 14,0, 14,5 ou 15,0 mm, et/ou de préférence que la hauteur (h) est de 0,75 mm à 15 mm, de préférence de 0,75, 1,0, 1,5, 2,0, 2,5, 3,0, 3,5, 4,0, 4,5, 5,0, 6,0, 7,0, 8,0, 9,0, 10,0, 11,0, 12,0, 13,0, 14,0 ou 15,0 mm.

5. Ecarteur (100) selon l'une quelconque des revendications 1 à 4, **caractérisé en ce que** l'ouverture (20) pour la réception d'un instrument endodontique (10) présente un diamètre (d_{O}) ≤ 2,0 mm, de préférence 2,0, 1,9, 1,8, 1,7, 1,6, 1,5, 1,4, 1,3, 1,2, 1,1, 1,0, 0,9, 0,8, 0,75, 0,7, 0,65, 0,6, 0,55, 0,5, 0,45, 0,4, 0,35, 0,3, 0,25, 0,2 ou 0,15 mm.

6. Ecarteur (100) selon l'une quelconque des revendications 1 à 5, **caractérisé en ce que** le diamètre (d_{D}) est de 2,5 mm à 10,0 mm, de préférence de 2,5, 3,0, 3,5, 4,0, 4,5, 5,0, 5,5, 6,0, 6,5, 7,0, 7,5, 8,0, 9,0, 9,5 ou 10,0 mm.

7. Ecarteur (100) selon l'une quelconque des revendications 1 à 6, **caractérisé en ce que** celui-ci est en métal, plastique, silicone, ou leur combinaison, de préférence PEEK (polyétheréthercétone), PPSU, POM-C ou acier inoxydable.

8. Ecarteur (100) selon l'une quelconque des revendications 1 à 7, **caractérisé en ce que** celui-ci présente un repère qui indique la hauteur (h).

9. Kit (300) destiné à être utilisé dans un traitement endodontique, comprenant un écarteur (100) selon l'une quelconque des revendications 1 à 8 et un dispositif (200) de mise à disposition de l'écarteur (100).

10. Kit (300) selon la revendication 9, **caractérisé en ce que** le kit (300) présente une rondelle (32) pour l'agrandissement fin de l'écarteur (100), dans lequel la rondelle (32) présente une hauteur ≤ 0,5 mm.
